# EUROPÄISCHE PATENTSCHRIFT

(11) **EP 0 586 773 B1**
(45) Veröffentlichungstag und Bekanntmachung des Hinweises auf die Patenterteilung: **20.05.1998**
(21) Anmeldenummer: 92810698.8
(22) Anmeldetag: 11.09.1992
(51) Int. Cl.: G03B 27/73

(54) **Verfahren zur Erstellung von Kopien von fotografischen Kopiervorlagen**
Method of producing copies from photographic originals
Méthode de production de copies à partir d'originaux photographiques

(43) Veröffentlichungstag der Anmeldung: 16.03.1994
(73) Patentinhaber: GRETAG IMAGING AG, CH-8105 Regensdorf (CH)
(72) Erfinder: Kraft, Walter, Dr., CH-8049 Zürich (CH)
(74) Vertreter: Schwabe - Sandmair - Marx

(56) Entgegenhaltungen:
- EP-A- 0 475 897
- US-A- 4 884 102

## Beschreibung

Die Erfindung betrifft ein Verfahren zur Erstellung von Kopien von fotografischen Kopiervorlagen, beispielsweise zur Erstellung von Farbabzügen von Farbnegativen, gemäss Oberbegriff des Patentanspruchs 1, wie in der EP 0 475 897 A offenbart.

In modernen Fotolabors werden heutzutage fotografische Kopiergeräte (fotografische Printer) zur automatischen Erstellung von Farbkopien ab Farbnegativen eingesetzt. In diesen Geräten werden die auf Filmstreifen vorliegenden Vorlagen im allgemeinen in einer Messstation des fotografischen Kopiergerätes in den drei Grundfarben Rot, Grün und Blau photoelektronisch abgetastet. Die Messergebnisse werden ausgewertet und zur Ermittlung der erforderlichen Kopierlichtmengen herangezogen. In einer Belichtungsstation des fotografischen Kopiergerätes werden sodann die gewünschten Kopien jeweils mit den ermittelten Kopierlichtmengen erstellt.

Die zur Bestimmung der Kopierlichtmengen verwendeten Verfahren beruhen zumeist auf Modifikationen des in der US 2 571 697 A beschriebenen Grundprinzips. Im allgemeinen werden befriedigende Farbkopien erzielt, wenn die Kopierlichtmengen in den drei Grundfarben so bemessen werden, dass die auf der Kopie gemessenen Farbdichten unabhängig von der Grundfärbung der Kopiervorlage im Mittel ein neutrales Grau ergeben. Als Grundlage für die Belichtungssteuerung dienen in diesem einfachen Falle die über die gesamte Vorlage gemittelten Farbdichten der Vorlage.
Dieses Verfahren, welches unter dem Namen "Integral-Korrektur" bekannt ist, versagt jedoch, wenn in der Vorlage grössere Flächen gleicher Farbe, sogenannte "Farbdominanten" vorkommen, da dann beispielsweise auf der Kopiervorlage farblich neutrale Bereiche auf der Kopie in der zur Dominanten komplementären Farbe reproduziert werden.

Bei moderneren Geräten, in denen die Kopiervorlage bereichsweise an einer Vielzahl von Stellen abgetastet wird, versucht man dieses Verfahren beispielsweise dadurch zu verbessern, dass man bei der Berechnung der erwähnten Mittelwerte farblich stark gesättigte Bereiche in der Kopiervorlage nicht oder nur mit reduzierter Gewichtung berücksichtigt. Allgemeiner formuliert, werden die erforderlichen Kopierlichtmengen aufgrund einer farblichen Analyse der Vorlagen bestimmt, wobei die "Farbe" eines Messpunktes üblicherweise relativ zu Referenzwerten, sogenannten Normaldichten, ermittelt wird. Als Referenzwerte werden sinnvollerweise die Messdichten farblich neutraler, normal belichteter Vorlagenbereiche verwendet. Eine andere Möglichkeit besteht darin, die Referenzwerte als die Mittelwerte der drei Messdichten in den drei Grundfarben über eine grössere Anzahl von Vorlagen zu definieren.

Insbesonere im Falle von Negativfilmen ist bekannt, dass diese, je nach Fabrikat, stark unterschiedliche Grundfärbungen aufweisen. Es ist daher erforderlich, für jeden Filmtyp einen spezifischen Satz von Referenzwerten zu ermitteln. Die heutigen Negativfilme sind üblicherweise mit einem Code (DX-Code, erweiterter DX-Code) versehen, aus welchem der Filmtyp ersichtlich ist. Damit ist es ohne weiteres möglich, aufgrund der anfallenden Messdaten filmtypspezifische Referenzwerte zu ermitteln und diese laufend aufzudatieren bzw. anzupassen. Eine andere Möglichkeit besteht darin, die Referenzwerte für jeden Film individuell zu bestimmen. Die kann beispielsweise durch eine (gewichtete) Mittelung über die diesem Film enstammenden Messwerte (Messdichten) erfolgen.

Eine Verbesserung des Verfahrens besteht darin, Referenzwerte zu verwenden, welche von einer sogenannten mittleren Dichte des jeweiligen Messpunktes abhängig sind. Die mittlere Dichte eines Messpunktes der Kopiervorlage ist beispielsweise als arithmetischer Mittelwert der drei Messdichten in den drei Grundfarben Rot, Grün und Blau definiert. Auf diese Weise können auch belichtungsabhängige Farbfehler der Vorlagen mitberücksichtigt werden. Dieses Verfahren ist beispielsweise in der DE 29 12 130 A beschrieben.

Aus der US 4 884 102 A ist eine Normierung der Meßdaten in Bezug auf filmabhängige charakteristiken der Vorlage bekannt.

Die skizzierten Verfahren zur Bestimmung der Farbe von Vorlagen(bereichen) können als einfache Normierungen betrachtet werden, welche das Ziel haben, den Einfluss der filmspezifischen Eigenschaften, welche Filmtyp-bedingt aber auch innerhalb eines bestimmten Filmtyps von Auftrag zu Auftrag variieren können, auf die für die Bildanalyse verwendeten Farbdaten zu reduzieren. In der Praxis zeigt sich jedoch, dass diese auf der Bestimmung von Referenzwerten beruhenden Verfahren nicht für alle Arten von Kopiervorlagen und Aufnahmematerialien die bestmöglichen Messwerte für die Bildanalyse liefern. Dies schränkt die Zuverlässigeit der Bildanalyse ein, und ist ein wesentlicher Grund dafür, dass nicht immer befriedigende Kopierergebnisse erzielt werden können.

Es besteht deshalb die Aufgabe, ein Verfahren zur Analyse fotografischer Kopiervorlagen zu schaffen, welches für die Bildanalyse weitgehend filmunabhängige Farbdaten liefert. Das Verfahren soll es erlauben, die aufgrund der Bildanalyse bestimmten farblichen Abweichungen der Kopiervorlage in Belichtungskorrekturwerte umzusetzen, welche die Eigenschaften des Aufnahmematerials wieder mitberücksichtigen. Eine weitere Aufgabe besteht darin, die Messdaten derart umzuformen, dass im normiertern Farbraum eine der Koordinaten als Mass für die Helligkeit oder "Neutraldichte" der Vorlage dienen kann, während zwei weitere Koordinaten eine "Farbebene" aufspannen, welche es erlaubt, die rein farblichen Eigenschaften (Farbton und Sättigung) der Vorlage zu analysieren.

Die Lösung all dieser und noch weiterer damit zusammenhängender Aufgaben besteht in einem Verfahren, welches die im Patentanspruch 1 angeführten Merkmale aufweist Besonders bevorzugte Verfahrensvarianten, die Teilaufgaben der vorliegenden Erfindung lösen, sind jeweils Gegenstand der abhängigen Patentansprüche.

Im folgenden wird die Erfindung in zwei beispielsweisen Verfahrensvarianten anhand der schematischen Darstellungen näher erläutert. Es zeigen:
- Fig. 1: eine schematische Darstellung eines Farbkopiergerätes
- Fig. 2: ein Blockschema des Belichtungssteuerungssystems des fotografischen Farbkopiergeraets, in welchem das erfindungsgemässe Verfahren eingesetzt wird,
- Fig. 3: ein Blockschema einer ersten Verfahrensvariante,
- Fig. 4: ein Blockschema einer zweiten erweiterten Verfahrensvariante,
- Fig. 5a und 5b: zwei Diagramme zur Erläuterung des Verfahrens zur Eliminierung von Farbfehlern,
- Fig. 6: ein Ablaufschema zur Bestimmung einer bei dem erfindungsgemässen Verfahren angewandten Normierungstransformation
- Fig. 7a bis 7d: Farbdiagramme von Blendenreihen ab Grautafel, auf verschiedene Film typen belichtet, vor und nach der Anwendung des erfindungsgemässen Verfahrens (18 verschiedene Filmtypen, 11 Negative pro Blendenreihe), und
- Fig. 8a und 8b: "Himmels-Farbe" auf Kopiervorlagen unterschiedlichen Filmfabrikats vor und nach der Anwendung des erfindungsgemässen Verfahrens.

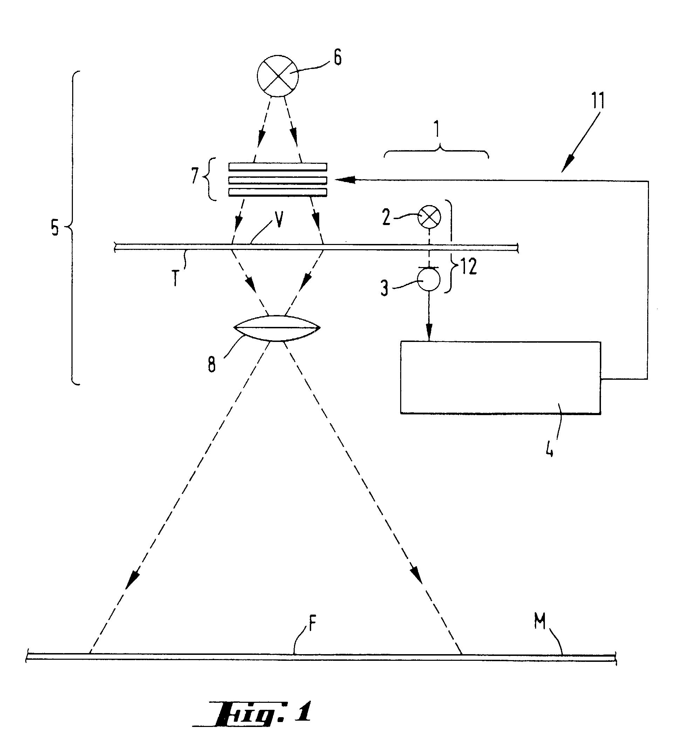

Das in Fig. 1 schematisch dargestellte fotografische Farbkopiergerät umfasst im wesentlichen eine Messstation 1, eine Rechen- und Auswerteeinheit 4 und eine Belichtungsstation 5. Die Messstation weist insbesondere eine Messlichtquelle 2 und eine Detektoranordnung 3 auf. Die Detektoranordung 3 ist derart ausgebildet, dass sie einerseits das von einem Abtastbereich einer Kopiervorlage V kommende Messlicht spektral aufspaltet und andererseits die einzelnen Spektralanteile detektiert und in wellenlängen- und intensitätsabhängige elektrische Messsignale umsetzt Die spektrale Aufspaltung des Messlichtes erfolgt beispielsweise bei der bekannten "drei-Farben-Messung" durch drei Farbfilter, sie kann aber auch beispielsweise durch ein Prisma, ein Beugungsgitter oder ein Spektralfilter erfolgen. Die einzelnen Spektralanteile werden mit einem lichtelektrischen Wandler, beispielsweise einem CCD-Bildsensor (Charge-Coupled-Device), detektiert und umgeformt. Der lichtelektrische Wandler ist an die Rechen- und Auswerteeinheit 4 angeschlossen zur Uebertragung der Messsignale. Die Belichtungsstation 5 ist ebenfalls mit der Rechen- und Auswerteeinheit 4 verbunden. Die Belichtungsstation umfasst im wesentlichen eine Kopierlichtquelle 6, einen Satz servogesteuerter Farbverschlüsse 7 und eine Abbildungsoptik 8 zur Projektion der Kopiervorlage V auf das Kopiermaterial M zur Erstellung der fotografischen Kopie F.

Die fotografische Kopiervorlage V wird in der Messstation 1 des fotografischen Farbkopiergerätes bereichsweise, vorzugsweise punktweise, vom Lichtstrahl der Messlichtquelle 2 abgetastet. Das von jedem Abtastbereich der Kopiervorlage V transmittierte oder remittierte Messlicht wird der Detektoranordnung 3 zugeführt, spektral zerlegt und in wellenlängen- und intensitätsabhängige elektrische Messsignale umgesetzt. Die elektrischen Messsignale werden digitalisiert und zu der Rechen- und Auswerteeinheit 4 weitergeleitet, wo sie zur Bestimmung der erforderlichen Kopierlichtmengen, insbesondere der logarithmischen Belichtungs-Korrektur, für die Grundfarben Blau, Grün und Rot ausgewertet werden. Die für die gesamte Kopiervorlage ermittelten Kopierlichtmengen für die drei Grundfarben Blau, Grün und Rot werden in Steuersignale umgeformt und an die Belichtungsstation 5 übergeben. In der Belichtungsstation 5 werden mit Hilfe dieser Steuersignale die Kopierlichtquelle 6 und die servogesteuerten Farbverschlüsse 7 gesteuert, um eine fotografische Farbkopie F von der Kopiervorlage V auf das Kopiermaterial M zu belichten. Soweit entspricht das fotografische Farbkopiergerät Geräten bekannter Bauart, beispielsweise dem in der EP 0 312 499 A beschriebenen Gerät.

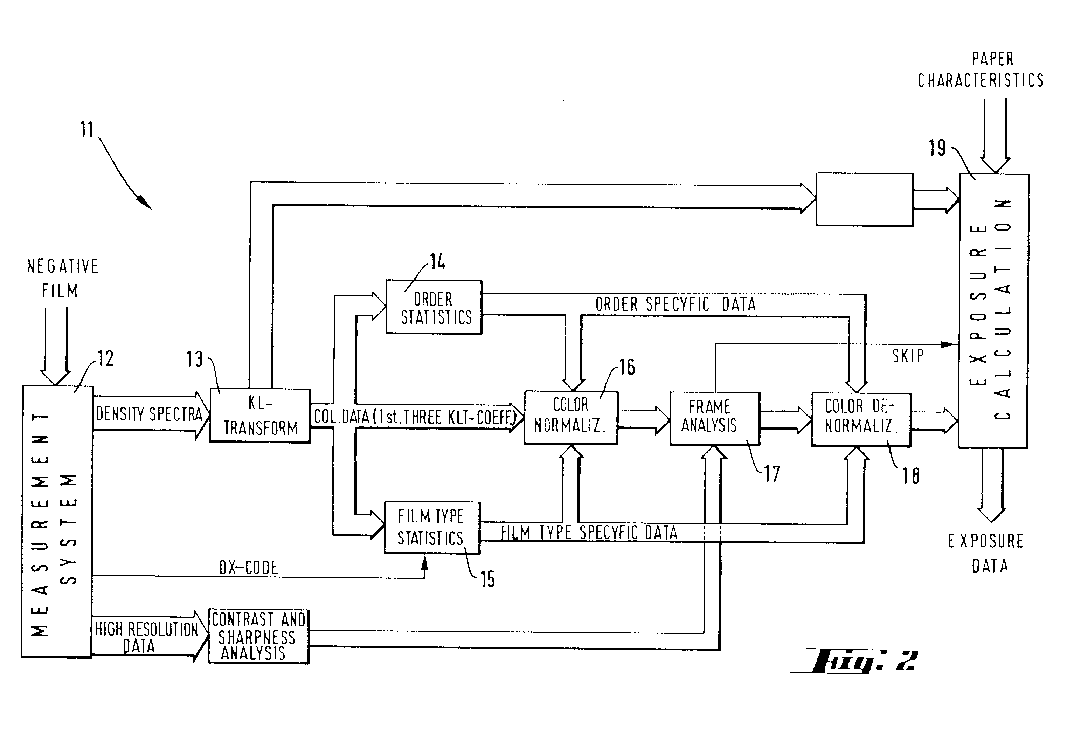

Die Messlichtquelle 2 und die Detektoranordnung 3 in der Messstation 1 sowie die Rechen- und Auswerteeinheit 4 bilden ein Belichtungssteuerungssystem 11, wie es in den Hochleistungsprintern der Anmelderin realisiert ist, und wie es in Fig. 2 dargestellt ist. Die schematische Darstellung beschränkt sich dabei auf die für die Erläuterung des erfindungsgemässen Verfahrens wesentlichen Elemente. Das Belichtungssteuerungssystem 11 umfasst ein Mess-System 12, welches sich aus der Messlichtquelle 2 und der Detektoranordnung 3 zusammensetzt, und mittels welchem die auf Filmstreifen befindlichen Kopiervorlagen V bereichsweise abgetastet werden. Pro Bereich werden beispielsweise 35 gleichmässig über den relevanten Wellenlängenbereich verteilte spektrale Dichtewerte bestimmt.

In einer mit dem Bezugszeichen 13 bezeichneten Datenreduktionsstufe, die Bestandteil der Rechen- und Auswerteeinheit 4 ist, werden aus den jeweils 35 spektrale Dichtewerte umfassenden Dichtespektren der abgetasteten Vorlagenbereiche jeweils drei "Farbwerte" k₀, k₁, k₂ extrahiert, welche beispielsweise zu den mit Hilfe eines Dreifarben-Scanners ermittelbaren Farbdichten in den drei Grundfarben Rot, Grün und Blau vergleichbar sind. Ein Verfahren zur Bestimmung der drei "Farbwerte" ist beispielsweise in der EP 0 475 897 A beschrieben. Bei diesem bekannten Verfahren wird auf jedes Dichtespektrum eine Datenkompression KLT angewendet und werden so mit Hilfe einer orthogonalen Transformation ("Karhunen-Loève-Transformation") die jeweiligen drei "Farbwerte" bestimmt.

Mit Hilfe zweier in der Rechen- und Auswerteeinheit 4 vorgesehenen Auswerte-Einheiten 14 und 15 werden die derart bestimmten Farbwerte k₀, k₁, k₂ erfasst und statistisch ausgewertet. Dabei wird einerseits 14 eine Statistik der Daten des aktuellen Filmstreifens erstellt, die als auftragsspezifische Statistik bezeichnet wird. Anderseits 15 dienen die anfallenden gemessenen und zu Farbwerten k₀, k₁, k₂ umgeformten Messdaten zur laufenden Auffrischung einer sogenannten filmtypspezifischen Statistik. Zur Zuordnung der jeweiligen Messdaten zu einem bestimmten Filmtyp wird vom Mess-System 12 auch der auf den Film aufgedruckte oder eingestanzte Filmcode erfasst. Es versteht sich, dass die filmtypspezifische Statistik auch von anderen Geräten erfasst werden kann. Die ermittelten Messdaten werden dann beispielsweise über eine Datenleitung von der jeweiligen Erfassungseinheit an die Auswerteeinheiten 14 und 15 mitgeteilt oder händisch eingegeben und so die filmspezifische Statistik nachgeführt.

In einer Normierungseinheit 16 der Rechen- und Auswerteeinheit 4 werden die rohen Farbwerte k₀ k₁, k₂ in normierte Farbwerte k₀', k₁', k₂' umgesetzt. Die Normierung basiert auf einer linearen oder nichtlinearen, umkehrbaren Transformation H, welche aus der auftragsspezifischen Statistik oder aus der filmtypspezifischen Statistik, oder aber aus einer gewichteten Kombination beider Statistiken ermittelt wird. In letzterem Falle kann die relative Gewichtung der beiden Statistiken von der Quantität und/oder der Qualität der für die Bestimmung der auftragsspezifischen Statistik verfügbaren Daten abhängig gemacht werden.

Falls die Farbwerte auf der bereichsweisen Ausmessung von relativ wenigen oder wenig repräsentativen Kopiervorlagen beruhen, wird vorzugsweise der filmtypspezifischen Statistik ein höheres Gewicht zugeordnet.

Falls das Belichtungssteuerungssystem 11 des fotografischen Kopiergerätes nicht die Möglichkeit einer direkten statistischen Erfassung der anfallenden Daten aufweisen sollte, kann das Normierungsverfahren auch mit fest gespeicherten filmtypspezifischen Transformationen durchgeführt werden.

Es ist nicht unbedingt erforderlich, die Farbwerte aller Kopiervorlagen V eines Films derselben Transformation zu unterwerfen. Vorzugsweise wird beispielsweise in regelmässigen Abständen aufgrund der aktuellen Messdaten eines Filmstreifens eine neue Transformation N bestimmt. Die Normierung der Farbwerte einer Kopiervorlage V erfolgt erst kurz bevor die die Kopiervorlage V kopiert wird und die erforderlichen Kopierlichtmengen bestimmt werden müssen. Auf diese Weise kann für die Normierung die jeweils aktuellste aus den aktuellen Messdaten ermittelte Transformation N angewendet werden.

In einer Analyse-Einheit 17, die gleichfalls Bestandteil der Rechen- und Auswerteeinheit 4 ist, werden aufgrund der farblichen, dichtemässigen und strukturellen Eigenschaften der "normierten Kopiervorlage" Korrekturwerte Δk ermittelt. Diese Korrekturwerte beziehen sich auf die gesamte Vorlage V und können idealisiert als farbliche Abweichungen zwischen der aktuellen (normierten) Kopiervorlage V und einer "idealen" Kopiervorlage gleichen Bildinhalts aufgefasst werden.

In einer der Analyse-Einheit 17 nachgeschalteten Denormierungseinheit 18, werden die zuvor ermittelten filmunabhängigen Korrekturwerte Δk der Analyse-Einheit 17 in denormierte Korrekturwerte Δk' umgeformt. Die denormierten Korrekturwerte Δk' berücksichtigen die farblichen Eigenschaften des zu kopierenden Filmmaterials wieder mit. Auf diese Weise ist es möglich, die Kopierlichtmengen für die jeweilige Vorlage V so zu bestimmen, dass diese optimal, ohne filmbedingte, beleuchtungsbedingte oder sujetbedingte (beispielsweise bei vorhanden Farbdominanten) Farbstiche, wiedergeben wird. Die Umformung der normierten Farbwerte in denormierte Farbwerte erfolgt dabei mit Hilfe einer zur jeweils verwendeten Normierungstransformation inversen Transformation D.

In einer zu der Rechen- und Auswerteeinheit 4 gehörigen Belichtungsberechnungs-Einheit 19 werden schliesslich aus den denormierten Korrekturwerten Δk' die erforderlichen Kopierlichtmengen oder Belichtungskorrekturen bestimmt, welche dem jeweils verwendeten Kopiermaterial M angepasst sind. Zur Bestimmung werden dabei sogenannte Papierparameter verwendet, welche mittels eines fotografischen Eintestverfahrens ermittelt werden, wie es beispielsweise in der EP 0 475 897 A beschrieben ist. Es versteht sich, dass auch andere als das dort beschriebene fotografische Eintestverfahren angewendet werden können, um die erforderlichen Kopierlichtmengen papierspezifisch zu ermitteln.

Die einzelnen Datenbearbeitungseinheiten 13 bis 19 sind in Fig. 1 aus Gründen der besseren Übersicht in der Rechen- und Auswerteeinheit 4 zusammengefasst. Es versteht sich, dass sie auch getrennte bauliche Einheiten bilden können.

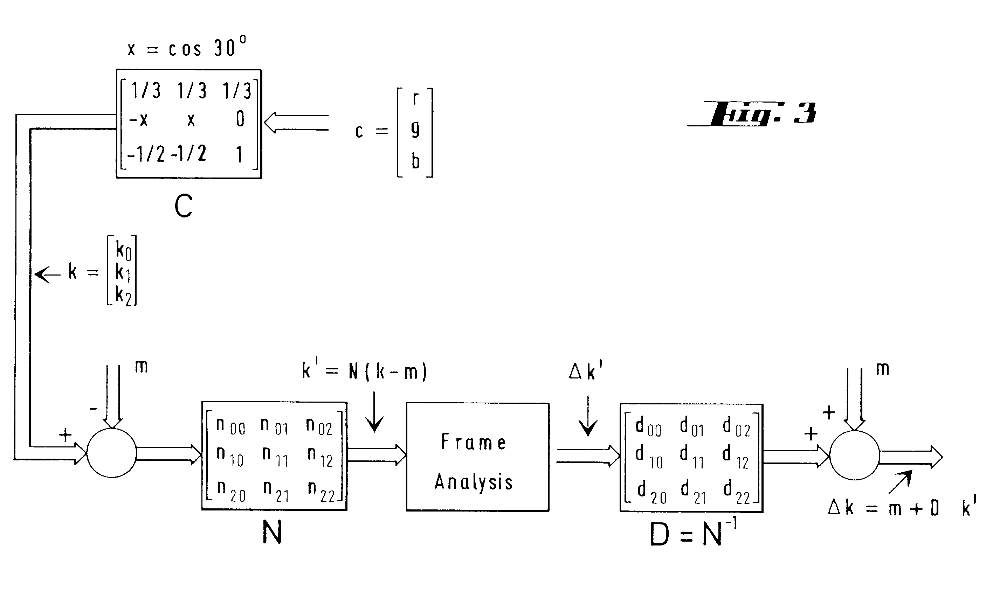

In Fig. 3 ist ein Blockschema einer ersten Variante des erfindungsgemässen Verfahrens dargestellt. Aus Gründen der Übersichtlichkeit der Darstellung sind in Fig. 3 nur die erfindungswesentlichen Verfahrensschritte von einer gegebenenfalls erforderlichen Vortransformation der Messdaten bis zur Bestimmung der denormierten Korrekturwerte angeführt. Auf die Andeutung der erforderlichen Verfahrensschritte zur Bestimmung der erforderlichen Kopierlichtmengen aus den denormierten Korrekturwerten in der Belichtungsberechnungs-Einheit 19 wurde verzichtet, da diese Stand der Technik ist und beispielsweise analog zu dem in der EP 0 312 499 A beschriebenen Verfahren erfolgt. Insbesondere handelt es sich dabei um den einfachsten Fall einer linearen Normierung der "rohen" Farbwerte. Für die Analyse der fotografischen Vorlage V ist es vorteilhaft, wenn die Eingangsdaten, die drei Farbwerte, in einer Form vorliegen, in welcher einer der Farbwerte als "Neutraldichte" und die anderen zwei Farbwerte als "Farbkoordinaten" eines Bildpunktes aufgefasst werden können. Erfüllen die "rohen" Farbwerte diese Bedingung bereits näherungsweise (beispielsweise bei Anwendung der in der EP 0,475,897 A beschrieben Datenkompression), so können sie direkt der Normierung unterworfen werden (Eingangsvektor k mit den Komponenten k₀, k₁ und k₂ in Fig. 3). Dabei bezeichnet der Wert von k₀ die "Neutraldichte", während die durch k₁ und k₂ festgelegten Koordinatenachsen eine Farbebene aufspannen. Andernfalls, beispielsweise wenn die Farbwerte aus der bereichsweisen Abtastung der Kopiervorlage mit einem Dreifarben-Scanner stammen (Vektor c mit den Farbdichten r, g und b in den drei Grundfarben Rot, Grün und Blau in Fig. 3), werden diese vorzugsweise zunächst einer festen Vortransformation C unterworfen. Die in Fig. 3 als Beispiel angeführte Vortransformation liefert ebenfalls einen Eingangsvektor k, dessen Komponente k₀ als "Neutraldichte" aufgefasst werden kann und den arithmetischen Mittelwert der drei Farbdichten r, g, b in den drei Grundfarben Rot, Grün und Blau darstellt. Die Komponenten k₁ und k₂ spannen beispielsweise die in der Farbfotografie übliche "trilineare" Farbebene auf.

Die als Eingangsvektor k formulierten "rohen" Farbwerte k₀, k₁ und k₂ werden nunmehr einer linearen Transformation unterworfen. Vorzugsweise wird als Normierungsmatrix N eine unitäre Matrix verwendet, da sich damit die Berechnung der Inversen Matrix für die anschliessende Denormierung D = N⁻¹ auf eine einfache Transposition D = N^{T} reduziert. Ausserdem hat diese Wahl zur Folge, dass D einer Rotation des Farbraumes entspricht und damit einfach interpretierbar ist. Diese in ihrem Grad datenabhängige Rotation dient im wesentlichen zur Korrektur des belichtungsabhängigen Farbfehlers eines Films und ist (bei richtiger Wahl der Vortransformation C) im allgemeinen gering. Dies bedeutet, dass sich D im allgemeinen nicht sehr stark von der Einheitsmatrix unterscheidet.

Vorzugsweise wird daher die Vortransformation C, falls erforderlich, derart gewählt, dass die anschliessende Normierung der "rohen Farbwerte" des Eingangsvektors k, mit einer unitären Matrix erfolgen kann, welche eine relativ geringfügige Rotation des Farbraumes durchführt. Die Ausgangsdaten der Normierung, zusammengefasst im Ausgangsvektor k', werden der Analyseeinheit 17 zugeführt.

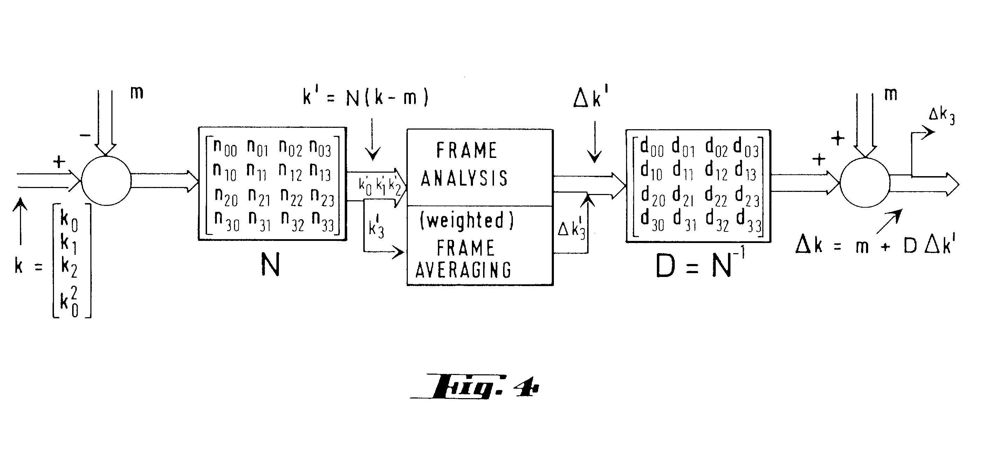

In Fig. 4 ist ein gegenüber dem in Fig. 3 dargestellten linearen Verfahren erweitertes Verfahren dargestellt, welches auch nichtlineare (beispielsweise wie dargestellt quadratische) Abhängigkeiten des Farbgangs eines Filmes von der "Neutraldichte" k₀ berücksichtigt. Dazu wird der Eingangsvektor k einfach um die Komponente (k₀)² erweitert und zu einem Ausgangsvektor k' transformiert. Die ersten drei Komponenten k₀', k₁' und k₂' des Ausgangsvektors k' beschreiben die Neutraldichte und den Farbort eines Bildpunktes und werden wie vorher der Analyseeinheit 17 zugeführt. Die vierten Komponenten k'₃ des Ausgangsvektors hingegen werden für eine gasamte Kopiervorlage zusammengefasst und daraus der Mittelwert über die jeweilige Kopiervorlage V berechnet. Anschliessend wird dieser Mittelwert zusammen mit dem von der Analyse-Einheit 17 gelieferten dreidimensionalen Korrekturvektor Δk' der Denormierungseinheit zugeführt.

Es ist klar, dass sich das in Fig. 4 dargestellte System im einfachsten Falle einer homogenen Bildvorlage und bei Anwendung des eingangs erwähnten "Integralkorrektur"-Verfahrens, in der Analyse-Einheit 17 auf eine Einheitstransformation (Ausgangsvektor = Eingangsvektoren) reduziert.

Die Erweiterung des Verfahrens auf die Berücksichtigung nichtlinearer Abhängigkeiten höheren als quadratischen Grades erfolgt auf analoge Weise und nach demselben Prinzip.

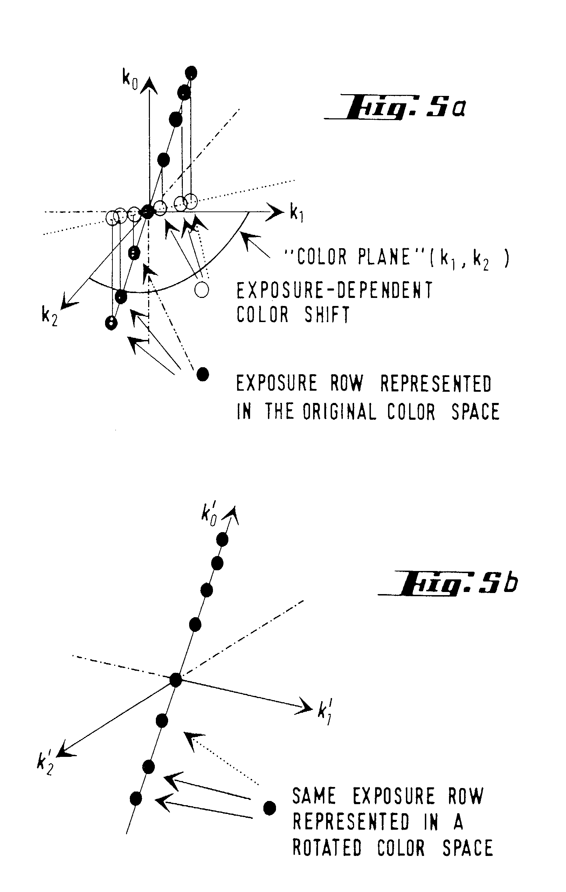

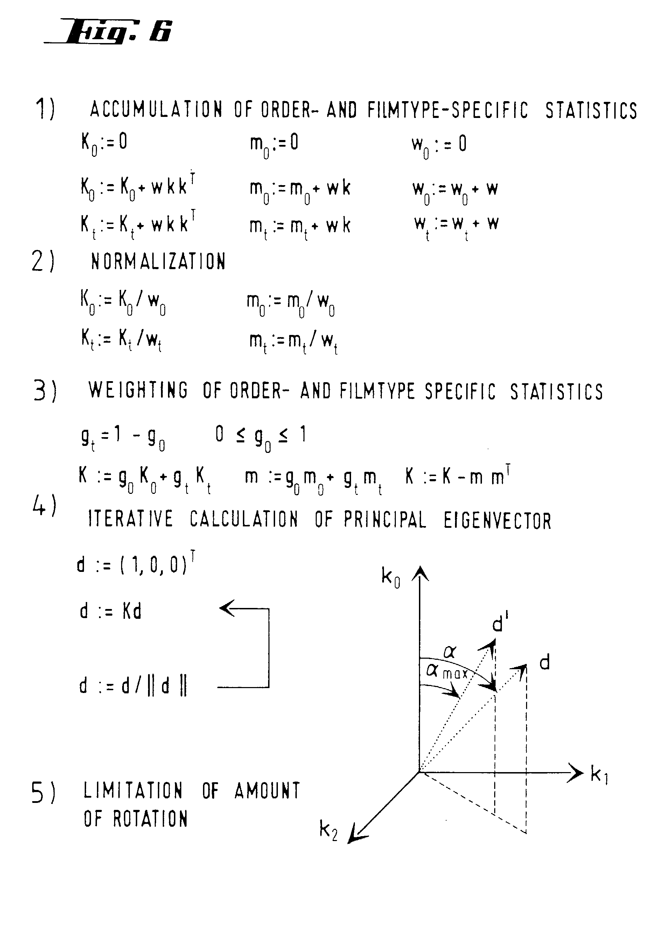

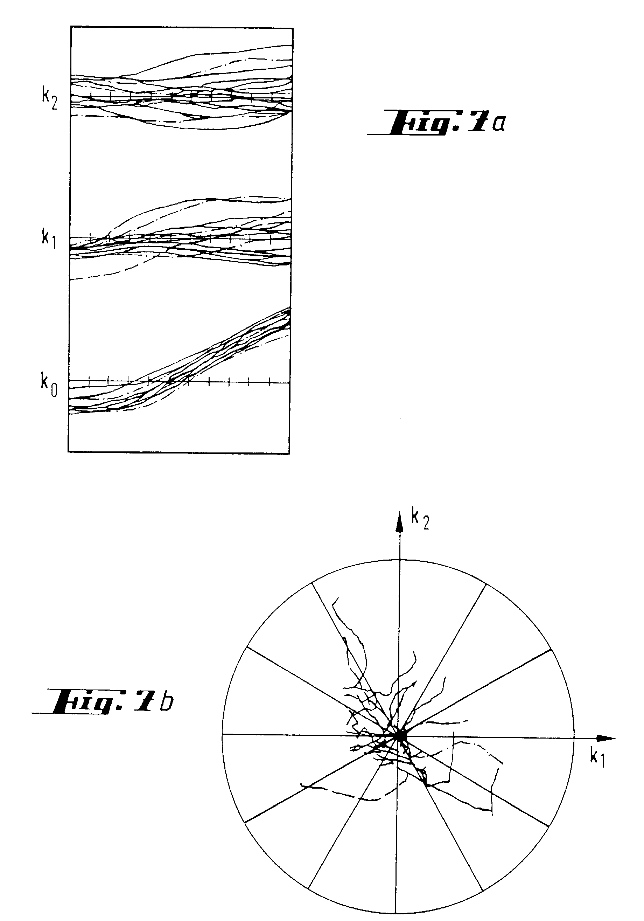

Erfindungsgemäss wird die Normierungstransformation N in Abhängigkeit der auftrags- und/oder filmtypspezifischen Messdaten bestimmt. Fig. 6 zeigt ein Ablaufschema zur Bestimmung der Normierungstransformation. Dem Verfahren liegt die einfache Feststellung zugrunde, dass der belichtungsabhängig Farbfehler eines Films, wie er beispielsweise bei der Ausmessung von Blendenreihen ab Grautafeln (Fig. 7a und 7b) festgestellt wird, zu einem grossen Teil auf die Verwendung eines bezüglich des vom Mess-System 12 bereichsweise ausgemessenen Films ungeeigneten Farbkoordinatensystems k₀, k₁, und k₂ zurückzuführen ist. Fig. 5a und 5b stellen diese Tatsache anhand eines idealisierten Beispiels dar und zeigen, dass eine einfache Rotation des aus den Farbwerten k₀, k₁ und k₂ resultierenden ursprünglichen Koordinatensystems zu einem Farbkoordinatensystem k₀', k₁' und k₂' führt, in dem der vermeintliche Farbfehler eliminiert ist.

In Wirklichkeit sind die Verhältnisse etwas komplizierter, d.h. die Messpunkte liegen im allgemeinen nicht exakt auf einer Geraden, sondern auf einer komplizierteren Kurve im dreidimensionalen Farbraum k₀, k₁, k₂. Diese Tatsache kann durch die Anwendung einer nichtlinearen Normierungstransformation N, wie beispielsweise bei der anhand von Fig. 4 erläuterten Verfahrensvariante, berücksichtigt werden. Aus Gründen der Anschaulichkeit beschränken sich die folgenden Ausführungen jedoch auf den Fall linearer Normierungsverfahren. Die Erweiterung auf den nichtlinearen Fall ist trivial, da sie nur eine Erhöhung der "Dimension" des Farbraumes durch die Erweiterung des Farbvektors k mit den Potenzen von k₀ beeinhaltet.

Gemäss Fig. 5a und 5b besteht bei der Bestimmung einer Normierungtransformation N, welche den auftrags- und/oder filmspezifischen Daten angepasst ist, die Aufgabe im wesentlichen darin, die für den jeweiligen Film beste Neutraldichte-Achse k₀' zu bestimmen. In einem von den normierten Koordinatenachsen k₀', k₁' und k₂' aufgespannten normierten Farbraum wird dann die Farbebene k₁', k₂' senkrecht zu dieser Dichteachse k₀' liegen. Sinnvollerweise werden die diese Farbebene aufspannenden Farbachsen k₁', k₂' derart bestimmt, dass sie zueinander orthogonal sind. Dabei wird ihre Ausrichtung derart gewählt, dass sie möglichst kleine Winkel mit den urspünglichen Farbachsen k₁, k₂ aufweisen. Bei der Ermittlung der gesuchten Dichteachse k₀' ist zu beachten, dass diese im allgemeinen nicht nur gegenüber der ursprünglichen Dichteachse k₀ um einen Ursprung gedreht ist, wie in den Fig. 5a und 5b dargestellt, sondern dass im allgemeinen auch eine Verschiebung m des Ursprungs des Koordinatensystems im Farbraum erforderlich ist.

Bei der Bestimmung der den vorliegenden auftrags- und/oder filmspezifischen Daten am besten angepassten Normierungstransformation N ist es hauptsächlich erforderlich, den Verschiebungsvektor m, der ein Mass für die erforderliche Verschiebung des Ursprungs des Koordinatensystems im Farbraum ist, und die Komponenten n₀₀, n₀₁, n₀₂ der ersten Zeile der Normierungstransformationsmatrix, welche die gesuchte Dichteachse beschreiben. Die Komponenten werden zu dem Vektor d = (n₀₀, n₀₁, n₀₂)^{T} zusammengefasst. Liegen der Verschiebungsvektor m und der Vektor d einmal vor, so lassen sich die übrigen Parameter der Normierungstransformation N und, wegen D = N⁻¹, auch der Denormierungtransformation D wegen der Randbedingung, dass die Achsen der gesuchten Farbebene auf die normierte Neutraldichteachse k₀' und aufeinander senkrecht stehen, auf einfache Weise bestimmen.

Am einfachsten gestaltet sich die Bestimmung der Dichteachse falls die Möglichkeit besteht, Testbilder (beispielsweise Blendenreihen oder Graukeile) auf das Filmmaterial aufzubelichten, diese auszumessen und auszuwerten. Der Verschiebungsvektor m und die Dichteachse d können dann aus den Messdaten bestimmt werden. Beispielsweise kommen dabei klassische Regressions- oder Ausgleichs-Verfahren zur Anwendung. Vorzugsweise werden jedoch Verfahren angewendet, die auf einer sogenannten Eigenvektor-Analyse beruhen.

Die Anwendung der Eigenvektoranalyse im erfindungsgemässen Verfahren wird im folgenden erläutert. Der Vorteil der Eigenvektoranalyse besteht darin, dass sie keine Testbilder voraussetzt, sondern auf einer statistischen Auswertung der Messdaten von üblicherweise auszumessenden Kopiervorlagen beruht. Bei fotografischen Aufnahmen ist die Variabilität der Farbdichten in weitaus höherem Masse durch Unterschiede der Belichtung (sowohl einzelner Bildbereiche als auch ganzer Bilder) bedingt, als durch farbliche Unterschiede in der Originalszene. Als besonders günstig erweisen sich daher Verfahren, welche als Dichteachse d den Haupt-Eigenvektor, d.h. den Eigenvektor mit dem grössten zugehörigen Eigenwert, der Kovarianzmatrix der "rohen" Farbvektoren k verwenden. Wegen des engen Zusammenhanges zwischen Belichtung und ''Neutraldichte'' kann der oben erwähnte Haupeigenvektor als "natürliche Dichteachse" betrachtet werden, da die Projektion der Farbvektoren auf diese Achse die grösstmögliche Varianz ergibt. Umgekehrt führt diese Wahl der Dichteachse zur Minimierung der Varianz in der normierten Farbebene, was wiederum als das eigentliche Ziel der Normierung betrachtet werden kann, gilt es doch die belichtungsbedingte farbliche Variabilität der Messdaten zu eliminieren.

Die einzelnen Grund-Schritte für die Bestimmung der Dichteachse d und des Verschiebungsvektors m sind in Fig. 6 zusammengestellt. Selbstverständlich können bei einer praktischen Implementierung einzelne Schritte im Detail anders realisiert werden als angegeben.
1) In einem ersten Schritt werden die anfallenden rohen Farbvektoren k und daraus resultierende einfache Korrelationsmatrizensummen K laufend gewichtet akkumuliert. Eine solche Akkumulation erfolgt einerseits für den aktuellen Film zur Erstellung der auftragsspezifischen Statistik. Dabei werden eine auftragsspezifische Korrelationsmatrixsumme Kₒ und eine auftragsspezifische Vektorsumme mₒ bestimmt. Anderseits wird auch eine Statistik für den Filmtyp geführt, dem der aktuelle Film angehört. Auf diese Weise kann auch die filmtypspezifische Statistik erstellt bzw. aufgefrischt werden. Dabei werden eine filmtypspezifische Korrelationsmatrixsumme Kₜ und eine filmtypspezifische Vektorsumme mₜ bestimmt. Für jede der beiden Statistiken werden aufgrund farblichen Sättigung der gemessenen Farbvektoren Gewichte wₒ und wₜ bestimmt, mit dem Ziel einer stärkeren Berücksichtigung farblich neutraler Messwerte. Als Mass für die Sättigung dient dabei der in der Farbebene gemessene Abstand des Farbvektors zu einem der Referenzvektor oder zu einem Schätzwert für die Grundfärbung des aktuellen Films (beispielsweise der Farbvektor des "dünnsten" Punktes, wie es beispielsweise in der DE 33 17 818 A beschrieben ist).
   Zu Beginn der Akkumulation wird die auftragsspezifische Korrelationsmatrixsumme Kₒ gleich der Nullmatrix gesetzt und wird die auftragsspezifische Vektorsumme mₒ gleich dem Nullvektor gesetzt. Das auftragsspezifische Gewicht wₒ erhält anfangs gleichfalls den Wert 0. Die Anfangswerte der filmtypspezifischen Korrelationsmatrixsumme Kₜ, der filmtypspezifischen Vektorsumme mₜ und des filmtypspezifischen Gewichts wₜ erhalten anfangs jeweils die Werte, die anhand der vorhergehenden Vorlage bestimmt wurden. In jedem Akkumulationsschritt (für jeden Farbvektor k) ergeben sich die neuen Werte aus den Werten des vorangehenden Schrittes und dem aktuellen Farbvektor bzw. dessen Gewicht nach den Zuordnungsvorschriften
   Kₒ:= Kₒ + w k k^{T} mₒ:= mₒ + w k wₒ: = wₒ + w
   Kₜ:= Kₜ + w k k^{t} mₜ:= mₜ + w k wₜ:= wₜ + w
2) Sobald für eine Vorlage V die Kopierlichtmengen benötigt werden, erfolgt als Vorbereitung für die Bestimmung einer aktuellen Transformation eine Normierung der aufgelaufen Korrelationsmatrizensummen und der Vektorsummen. Das Resultat sind je ein Verschiebungsvektor m₀, bzw. mₜ und eine Korrelationsmatrix k₀, Kₜ bzw. für den aktuellen Film und Filmtyp, die nach den Zuordnungsvorschriften
   Kₒ:= Kₒ/wₒ mₒ:= mₒ/wₒ
   Kₜ:= Kₜ/wₜ mₜ:= mₜ/wₜ
   bestimmt werden.
3) Mittels einer gewichteten Mittelung werden aus den beiden Statistiken in einem weiteren Schritt der endgültige Verschiebungsvektor m und eine Gesamtkovarianzmatrix K bestimmt. Die Wichtung erfolgt dabei mit dem Ziel einer stärkeren Berücksichtigung farblich neutraler Messwerte. Falls die Farbvektoren auf der bereichsweisen Ausmessung von relativ wenigen oder wenig repräsentativen Kopiervorlagen beruhen, wird vorzugsweise der filmtypspezifischen Statistik ein höheres Gewicht zugeordnet. Die Gewichte, mit denen die beiden Statistiken berücksichtigt werden sind dabei wie folgt bestimmt:
   gₜ = 1 - gₒ , wobei gilt 0 ≤ gₒ ≤ 1
   Die Zuordnungsvorschriften für den endgültigen Verschiebungsvektor m lautet:
   m := gₒ mₒ + gₜ mₜ
   Die Gesamtkovarianzmatrix wird in zwei Teilschritten ermittelt. Die Zuordnungsvorschriften für die Teilschritte lauten wie folgt:
   a) K:= gₒ Kₒ + gₜ Kₜ
   b) K := K - m m^{T}
4) In einem vierten Schritt wird der Haupteigenvektor d der Kovarianzmatrix K bestimmt. Dazu werden beispielsweise einfache Vektoriterationsverfahren wie das Mises-Verfahrens, das z.B. in "I.N. Bronstein, K.A. Semendjajew: Taschenbuch der Mathematik, 19. Auflage, Harri Deutsch Verlag, Thun, 1980 beschrieben ist.
5) Für den Fall das beispielsweise nur relativ wenige Messdaten für die Auswertung zur Verfügung stehen) kann es von Vorteil sein, das Ausmass der zulässigen Rotation α des Koordinatensystems des Farbraums, insbesondere der Neutraldichteachse, auf einen maximal zulässigen Wert αₘₐₓ und/oder den Betrag des Verschiebungsvektors m auf einen maximal zulässigen Wert zu begrenzen.

In den Diagrammen 7a bis 7d ist die Wirksamkeit des erfindungsgemässen Verfahrens dargestellt. Fig. 7a und 7b zeigen in zwei Darstellungsweisen die "rohen" Messdaten, sich aus der Ausmessung von Kopiervorlagen, im speziellen Fall von Negativvorlagen, unterschiedlichen Filmtyps ergeben. Bei den Negativen handelt es sich um Blendenreihen ab einer Norm-Grautafel. Pro Film wurde eine Blendenreihe mit 12 Negativen aufbelichtet. In der in Fig. 7b dargestellten Farbebene sind jeweils die 12 Messwerte eines Films mittels eines Streckenzugs verbunden. Bei der Darstellung in Fig. 7a sind die 12 Messwerte eines Films ebenfalls zu einem Streckenzug verbunden. Allerdings sind die drei Farbwerte getrennt und in Abhängigkeit von der Belichtung aufgetragen.
Aus den Abbildungen 7a und 7b geht deutlich hervor, dass jeder Film einen charakteristischen belichtungsabhängigen Farbgang und eine eigene Grundfärbung aufweist. Diese Tatsache macht es in der Praxis schwer, farblich neutrale Bereiche der Kopiervorlagen sicher zu erkennen.

In den Fig. 7c und 7d sind dieselben Daten nach der Normierung dargestellt Für die Bestimmung der Normierungstransformation N wurden dabei einzig die Messdaten der Negative des jeweiligen Films, d.h. die auftragsspezifische Statistik, verwendet. Die filmbedingten farblichen Verzerrungen sind auf ein Mass reduziert worden, welches praktisch bedeutungslos ist. Durch Anwendung der inversen Transformation können die normierten Daten wieder in die ursprünglichen "Rohdaten" zurücktransformiert werden.

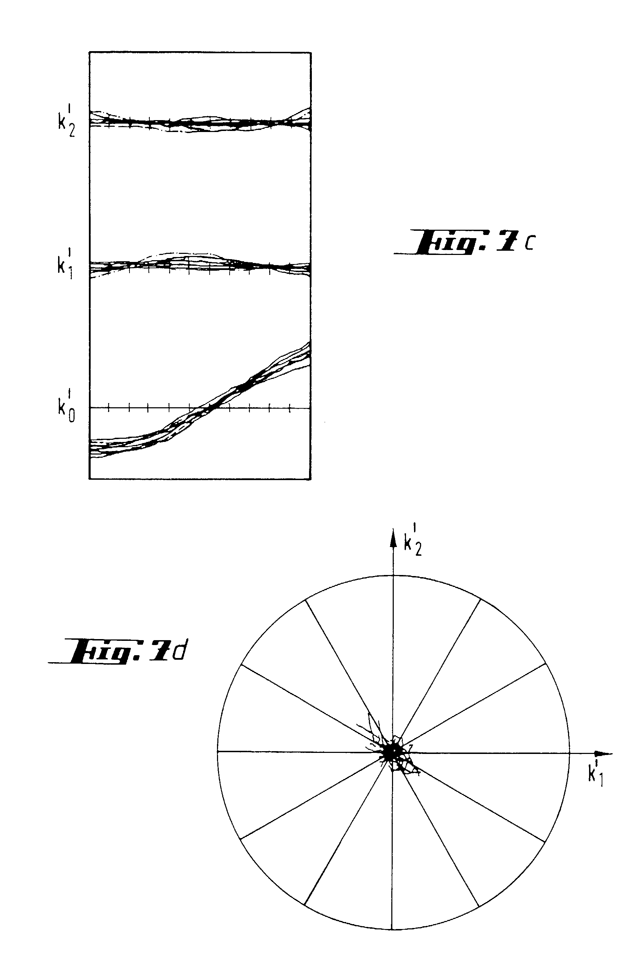

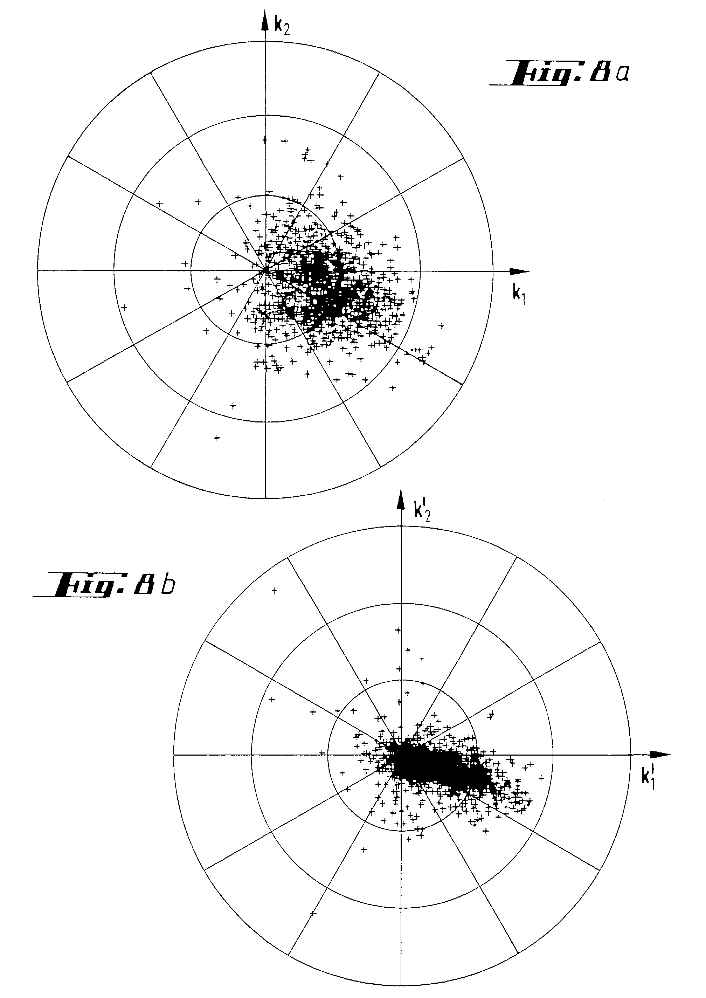

In den Fig. 8a und 8b ist die Verteilung von Messwerten in der Farbebene dargestellt, welche den Himmelsbereichen einer Vielfalt von Negativ-Vorlagen entstammen. Die grosse Streuung der "Rohdaten" ist in Fig. 8a deutlich zu erkennen. In Fig. 8b sind dieselben Daten nach der Normierung dargestellt. Es ist eine deutliche Häufung der Datenpunkte entlang der Cyan-achse feststellbar. Die verbliebenen Unterschiede betreffen in erster Linie die Farbsättigung und nicht den Farbton. Sie spiegeln die tatsächliche Variabilität, mit welcher "Himmelsfarbe" auftreten kann, wieder. Anhand dieses Beispiels ist ersichtlich, dass nach der Anwendung des erfindungsgemässen Verfahrens, insbesondere nach der Normierung der "Rohdaten", Himmelspartien in der Kopiervorlage sicherer erkannt werden können, und somit eine bessere Reproduktion beispielsweise von Gegenlichtaufnahmen, welche üblicherweise beim automatischen Kopieren von Farbvorlagen gewisse Probleme aufwerfen, erreicht werden kann. Die Anwendung des erfindungsgemässen Verfahrens erlaubt auch eine weit zuverlässigere Erkennung von Hautfarbe, Kunstlicht, Vegetation usw.

Wie aus dem anhand der Fig. 7a bis 7d dargestellten Anwendungsbeispiel ersichtlich, ist das erfindungsgemässe Verfahren auch anwendbar, wenn nur eine der beiden Statistiken, die auftragsspezifische oder die filmtypspezifische Statistik verfügbar ist.

Die Anwendung der erfindungsgemässen Verfahrens erlaubt eine im Vergleich zu herkömmlichen Systemen wesentlich zuverlässigere Analyse des Bildeinhalts, da sie auf Farbdaten basiert, die weitgend von filmbedingten Farbverfälschungen befreit sind. Ein weiterer Vorteil des Verfahrens besteht darin, das sich die Güte konventioneller Analyseprogramme durch Vorschalten einer Normierungseinheit und Nachschalten einer entsprechenden Denormierungseinheit auf einfache Weise verbessern lässt, ohne dass weitergehende Änderungen am Gesamtsystem notwendig wären.

## Patentansprüche

1. Verfahren zur Erstellung von Kopien von fotografischen Kopiervorlagen in einem fotografischen Farbkopiergerät, welches die folgenden Verfahrensschritte umfasst:
a) die Kopiervorlage (V) wird in einer Messstation (1) des fotografischen Farbkopiergeräts von einem Mess-System (12) bereichsweise, vorzugsweise punktweise, abgetastet und das von jedem Abtastbereich der Kopiervorlage (V) transmittierte oder remittierte Messlicht wird einer Detektoranordnung (3) zugeführt, vorzugsweise spektral zerlegt, und in wellenlängen- und intensitätsabhängige elektrische Messignale umgesetzt;
b) die als elektrische Messignale vorliegenden Daten werden digitalisiert und daraus mittels einer umkehrbaren Vortransformation (C) bzw. Datenkompression (KLT) Farbwerte ermittelt, welche einen Eingangsvektor (k) bilden, wobei einer der Farbwerte (k₀) des Eingangsvektors (k) eine Neutraldichte darstellt und zwei andere Farbwerte (k₁,k₁) Farbkoordinaten eines Farbraumes entsprechen, der durch die von den Farbwerten (k₀,k₁,k₂) festgelegten Koordinatenachsen aufgespannt wird,
b1) dieser Eingangsvektor (k) wird zur weiteren Bearbeitung einer Rechen- und Auswerteeinheit (4) zugeführt,
c) die Farbwerte werden in einer Analyse-Einheit (17) analysiert und es werden aus ihnen Korrekturwerte (Δk) in Bezug auf eine ideale Kopievorlage ermittelt;
d) in einer Belichtungsberechnungs-Einheit (19) werden aus den Korrekturwerten die tatsächlich erforderlichen Kopierlichtmengen bestimmt, welche dann an eine Belichtungsstation (5) zur Erstellung der gewünschten Kopien (F) von der Kopiervorlage (V) weitergeleitet werden;
gekennzeichnet durch die folgenden Verfahrensschritte:
e) die Farbwerte des Eingangsvektors (k) werden in einer Normierungseinheit (16) einer umkehrbaren linearen oder nichtlinearen, filmauftrags- und/oder filmtypspezifischen Normierungstransformation (N) unterworfen und zu normierten Farbwerten (k') umgesetzt, welche die Eingangsdaten für die Analyse-Einheit (17) bilden;
f) in der Analyse-Einheit (17) werden aus den normierten Farbwerten (k') unter Berücksichtigung von farblichen, dichtemässigen und strukturellen Eigenschaften der Kopiervorlage (V) filmunabhängige normierte Korrekturwerte (Δk') gebildet;
g) in einer der Analyse-Einheit (17) nachgeschalteten Denormierungseinheit (18) werden die filmunabhängigen normierten Korrekturwerte (Δk') der Analyse-Einheit (17) durch Anwendung einer Denormierungstransformation (D), die zur Normierungstransformation (N) invers ist, in denormierte Korrekturwerte (Δk) umgeformt, welche die farblichen Eigenschaften des zu kopierenden Filmmaterials wieder mitberücksichtigen.

2. Verfahren nach Anspruch 1, dadurch gekennzeichnet, dass für den Fall, dass die Zahl der digitalisierten Messignale eines Abtastbereiches der Kopiervorlage (V) grösser als drei ist, diese in einer Datenreduktionsstufe (13) einer Datenkompression (KLT) unterworfen und daraus drei Farbwerte (k₀, k₁, k₂) bestimmt werden, welche jeweils den Eingangsvektor (k) für die Normierungs-Einheit (16) bilden , und dass im Fall, dass die Anzahl der Messignale drei ist und diese den Farbdichten (r, g, b) der drei Grundfarben Rot, Grün und Blau entsprechen, die Farbmessdaten einer festen Vortransformation (C) unterworfen werden, derart, dass drei Farbwerte (k₀, k₁, k₂) erzeugt werden, welche den Eingangsvektor (k) für die Normierungs-Einheit (16) bilden

3. Verfahren nach Anspruch 2, dadurch gekennzeichnet, dass im Falle einer nichtlinearen Normierungstransformation (N) der Eingangsvektor (k) der Normierungs-Einheit (16) durch weitere Komponenten erweitert wird, welche vorzugsweise durch Potenzen der ersten Komponente (kₒ) gebildet werden.

4. Verfahren nach Anspruch 2 oder 3, dadurch gekennzeichnet, dass die Farbwerte (k₀, k₁, k₂) erfasst, statistisch ausgewertet und zur Bestimmung der Normierungstransformation (N) herangezogen werden.

5. Verfahren nach Anspruch 4, dadurch gekennzeichnet, dass die Normierungstransformation (N) derart gewählt wird, dass sie eine unitäre Matrix bildet.

6. Verfahren nach Anspruch 5, dadurch gekennzeichnet, dass eine auftragsspezifische Statistik und eine filmtypspezifische Statistik der ermittelten Farbwerte erfasst werden, und dass die Normierungstransformation (N) aus der auftragsspezifischen Statistik oder aus der filmtypspezifischen Statistik, oder aber aus einer gewichteten Kombination beider Statistiken ermittelt wird.

7. Verfahren nach Anspruch 6, dadurch gekennzeichnet, dass die Normierungstransformation (N) jeweils für jede Kopiervorlage (V) von neuem aus einer gewichteten Kombination der auftragsspezifischen Statistik und der filmtypspezifischen Statistik ermittelt wird, wobei das Verfahren zur Ermittlung der Normierungstransformation (N) die folgenden Verfahrensschritte umfasst:
(i) die anfallenden Eingangsvektoren (k) und daraus resultierende Korrelationsmatrizen (K= k k^{T}) werden laufend gewichtet akkumuliert, wobei eine auftragsspezifische Korrelationsmatrix (Kₒ) und ein auftragsspezifischer Verschiebungsvektor (mₒ) sowie eine filmtypspezifische Korrelationsmatrix (Kₜ) und ein filmtypspezifischer Verschiebungsvektor (mₜ) und für jede der beiden Statistiken aufgrund der farblichen Sättigung der gemessenen Eingangsvektoren Gewichte (wₒ) und (wₜ) bestimmt werden;
(ii) mittels einer gewichteten Mittelung werden aus den beiden Statistiken in einem weiteren Schritt ein endgültiger Verschiebungsvektor (m) und eine Gesamtkovarianzmatrix (K) bestimmt;
(iii) es wird ein Haupteigenvektor (d) der Kovarianzmatrix (K) bestimmt;
(iv) aus der Kenntnis des Verschiebungsvektors (m) und des Haupteigenvektors (d), dessen Komponenten die Komponenten (n₀₀, n₀₁, n₀₂) der ersten Zeile der Normierungstransformationsmatrix (N) darstellen, werden unter der Randbedingung, dass die Achsen der gesuchten Farbebene auf die normierte Neutraldichteachse (k₀') und aufeinander senkrecht stehen, die übrigen Komponenten der Normierungstransformationsmatrix (N) und, wegen D = N⁻¹, auch der Denormierungtransformation (D) bestimmt.

8. Verfahren nach einem der vorangehenden Ansprüche, dadurch gekennzeichnet, dass die Bestimmung der denormierten Korrekturwerte (Δk) für eine bestimmte Kopiervorlage (V) erst unmittelbar vor der Erstellung der gewünschten Farbkopien (F) davon bestimmt werden, sodass die von dieser Kopiervorlage (V) gewonnenen Farbwerte der jeweils aktuellsten Normierungstransformation (N) und die daraus ermittelten normierten Korrekturwerte (Δk') der jeweils aktuellsten Denormierungstransformation (D) unterworfen werden, welche zur jeweiligen Normierungstransformation (N) invers ist.

## Claims

1. Process for producing copies of photographic copying originals in a photographic colour copying unit, which process includes the following process steps:
a) The copying original (V) is scanned region-by-region, preferably point-by-point, in a measurement station (1) of the photographic colour copying unit by a measuring system (12) and the measurement light transmitted or sent back by each scanning region of the copying original (V) is supplied to a detector arrangement (3), is preferably decomposed spectrally and is converted into electrical measurement signals which depend on wavelength and intensity;
b) the data present as electrical measurement signals are digitalised and colour values are determined from them by means of a reversible preliminary transformation (C) or data compression (KLT), which colour values form an input vector (k), one of the colour values (k₀) of the input vector (k) representing a neutral density and two other colour values (k₁, k₂) corresponding to colour co-ordinates of a colour space which is based on the co-ordinate axes prescribed by the colour values (k₀, k₁, k₂),
b1) this input vector (k) is supplied to a computing and evaluation unit (4) for further processing,
c) the colour values are analysed in an analysis unit (17) and correction values (Δk) relative to an ideal copying original are determined from them;
d) the copying light quantities actually required are determined from the correction values in an exposure calculation unit (19) and these copying light quantities are then guided onto an exposure station (5) for the production of the desired copies (F) of the copying original (V);
characterized by the following process steps:
e) the colour values of the input vector (k) are subjected, in a normalisation unit (16), to a reversible linear or non-linear normalisation transformation (N) specific to film order and/or film type and are converted to normalised colour values (k'), which form the input data for the analysis unit (17);
f) the film-independent normalised correction values (Δk') are formed in the analysis unit (17) from the normalised colour values (k'), taking account of the colour, density and structural properties of the copying original (V);
g) the film-independent normalised correction values (Δk') of the analysis unit (17) are converted into denormalised correction values (Δk) in a denormalisation unit (18) downstream of the analysis unit (17) by the use of a denormalisation transformation (D) which is the inverse of the normalisation transformation (N), which denormalised correction values (Δk) again take the colour properties of the film material to be copied into account.

2. Process according to Claim 1, characterized in that in the case where the number of digitalised measurement signals from a scanning region of the copying original (V) is greater than three, these measurement signals are subjected to data compression (KLT) in a data reduction stage (13) and from them are determined three colour values (k₀, k₁, k₂) which respectively form the input vector (k) for the normalisation unit (16) and in that in the case where the number of measurement signals is three and these correspond to the colour densities (r, g, b) of the three basic colour red, green and blue, the colour measurement data are subjected to a fixed preliminary transformation (C) in such a way that three colour values (k₀, k₁, k₂) are generated which form the input vector (k) for the normalisation unit (16).

3. Process according to Claim 2, characterized in that in the case of a non-linear normalisation transformation (N), the input vector (k) of the normalisation unit (16) is extended by further components which are preferably formed by powers of the first component (k₀).

4. Process according to Claim 2 or 3_{,} characterized in that the colour values (k₀, k₁, k₂) are recorded, statistically evaluated and used for determining the normalisation transformation (N).

5. Process according to Claim 4, characterized in that the normalisation transformation (N) is selected in such a way that it forms a unitary matrix.

6. Process according to Claim 5, characterized in that for the colour values determined, statistics specific to the order and statistics specific to the film type are recorded and in that the normalisation transformation (N) is determined from the statistics specific to the order or the statistics specific to the film type or from a weighted combination of both sets of statistics.

7. Process according to Claim 6, characterized in that the normalisation transformation (N) is respectively determined anew for each copying original (V) from a weighted combination of the statistics specific to the order and the statistics specific to the film type, the process for determining the normalisation transformation (N) including the following process steps:
(i) the input vectors (k) occurring and the correlation matrices (K = k k^{T}) resulting from them are continuously accumulated in a weighted manner, a correlation matrix (K₀) specific to the order and a displacement vector (m₀) specific to the order together with a correlation matrix (K₁) specific to the film type and a displacement vector (m₁) specific to a film type and weightings (w₀) and (w₁) for each of the two sets of statistics being determined on the basis of the colour saturation of the measured input vectors;
(ii) a final displacement vector (m) and an overall covariance matrix (K) are determined in a further step by means of weighted averaging of the two sets of statistics;
(iii) a principal eigenvector (d) of the covariance matrix (K) is determined;
(iv) under the boundary condition that the axes of the colour plane sought are at right angles to the normalised neutral density axis (k₀') and to one another, the other components of the normalisation transformation matrix (m) (and, because D =N⁻¹, of the denormalisation transformation (d) also) are determined from knowledge of the displacement vector (m) and the main eigenvector (d), whose components represent the components (n₀₀, n₀₁, n₀₂) of the first line of the normalisation transformation matrix (N).

8. Process according to one of the preceding claims, characterized in that the denormalised correction values (Δk) for a particular copying original (V) are only determined immediately before the production from it of the desired colour copies (F), so that the colour values obtained from this copying original (V) are subjected to the respectively most up-to-date normalisation transformation (N) and the normalised correction values (Δk') determined from it are subjected to the respectively most up-to-date denormalisation transformation (D), which is the inverse of the respective normalisation transformation (N).

## Revendications

1. Procédé de production de tirages à partir d'originaux photographiques dans une tireuse photographique couleur, qui comporte les pas de procédé suivant:
a) L'original (V) est exploré, zone par zone et de préférence point par point, dans une station de mesure (1) de la tireuse photographique couleur par un système de mesure (12) et la lumière mesurée, transmise ou renvoyée par chaque zone explorée de l'original (V), est envoyée au dispositif de détection (3), décomposée, principalement selon le spectre, et convertie en signaux électriques de mesure fonctions de la longueur d'onde et de l'intensité;
b) les données obtenues sous forme de signaux électriques de mesure sont numérisées et, à partir de ces données, sont déterminées, au moyen d'une prétransformation réversible (C) ou d'une compression des données (transformation KLT/transformation Karhunen-Loève) des valeurs chromatiques qui forment un vecteur d'entrée (k), l'une des valeurs chromatiques (k₀) du vecteur d'entrée (k) représentant une densité neutre et deux autres valeurs chromatiques (k₁, k₂) correspondant à des coordonnées chromatiques d'un espace chromatique qui est défini par les axes de coordonnées déterminés par les valeurs chromatiques (k₀,k₁,k₂),
b1) ce vecteur d'entrée (k) est envoyé, pour la suite du traitement, à un organe de calcul et de traitement (4),
c) les valeurs chromatiques sont analysées dans un organe d'analyse (17) et, à partir de ces valeurs, sont établies des valeurs correctrices (Δk) en référence à un original idéal,
d) dans un organe de calcul de l'éclairement (19) sont déterminées, à partir des valeurs correctrices, les quantités de lumière qui sont effectivement nécessaires pour le tirage et sont alors transmises à une station d'éclairement (5) pour produire les tirages désirés (F) de l'original (V);
caractérisé par les pas de procédé suivants:
e) les valeurs chromatiques des vecteurs d'entrée (k) sont soumises, dans un organe de normalisation (116), à une transformation de normalisation (N) réversible, linéaire ou non linéaire, spécifique de la commande du film et/ou spécifique du type de film et converties en valeurs chromatiques normalisées (k') qui forment les données d'entrée pour l'organe d'analyse (17);
f) dans l'organe d'analyse (17), à partir des valeurs chromatiques normalisées (k'), sont formées, en tenant compte des caractéristiques chromatiques, de densité et de structure de l'original (V), des valeurs correctrices normalisées (Δk') indépendantes du film;
g) dans un organe de dénormalisation (18) monté en aval de l'organe d'analyse (17), les valeurs correctrices normalisées (Δk'), indépendantes du film, de l'organe d'analyse (17) sont converties, par application d'une transformation de dénormalisation (D) qui est l'inverse de la transformation de normalisation (N), en valeurs correctrices dénormalisées (Δk) qui tiennent à nouveau compte des caractéristiques chromatiques du matériau du film à trier.

2. Procédé selon la revendication 1, caractérisé par le fait que, dans le cas où le nombre des signaux de mesure normalisés d'une zone d'exploration de l'original (V) est supérieur à trois, ces signaux sont soumis, dans un étage (13) de réduction des données, à une compression des données (transformation KLT) et il en est déterminé trois valeurs chromatiques (k₀,k₁,k₂) qui forment chacune le vecteur d'entrée (k) pour l'organe de normalisation (16) et que, dans le cas où le nombre des signaux de mesure est de trois et que ceux-ci correspondent aux densités chromatiques (r, g, b) des trois couleurs de base rouge, vert et bleu, les données de mesure chromatique sont soumises à une prétransformation fixe (C) de façon que soient produites trois valeurs chromatiques (k0, k1, k2) qui forment le vecteur d'entrée (k) pour l'organe de normalisation (16).

3. Procédé selon la revendication 2, caractérisé par le fait que dans le cas d'une transformation de normalisation (N) non linéaire, le vecteur d'entrée (k) de l'organe de normalisation (16) est étendu à d'autres composantes qui sont de préférence formées par des puissances de la première composante (k₀).

4. Procédé selon la revendication 2 ou 3, caractérisé par le fait que les valeurs chromatiques (k₀,k₁,k₂) sont saisies, traitées par distribution statistique et employées pour déterminer la transformation de normalisation (N).

5. Procédé selon la revendication 4, caractérisé par le fait que l'on choisit la transformation de normalisation (N) de façon qu'elle forme une matrice unitaire.

6. Procédé selon la revendication 5, caractérisé par le fait que sont saisies une distribution statistique spécifique de la commande et une distribution statistique spécifique du type de film des valeurs chromatiques déterminées et que la transformation de normalisation (N) est établie à partir de la distribution statistique spécifique de la commande ou à partir de la distribution statistique spécifique du type de film ou bien à partir d'une combinaison pondérée des deux distributions statistiques.

7. Procédé selon la revendication 6, caractérisé par le fait que la transformation de normalisation (N est chaque fois déterminée, pour chaque original (V), à nouveau, à partir d'une combinaison pondérée de la distribution statistique spécifique de la commande et de la distribution statistique spécifique du type de film, le procédé de détermination de la transformation normalisée (N) comportant les pas de procédé suivants:
(i) les vecteurs d'entrée (k) qui se présentent et les matrices de corrélation (K=k k^{T}) qui en résultent sont accumulés, pondérés, en permanence, étant précisé que sont déterminés une matrice de corrélation (K₀) spécifique de la commande et un vecteur de décalage (m₀) spécifique de la commande ainsi qu'une matrice de corrélation (Kₜ) spécifique du type de film et un vecteur de décalage (mₜ) spécifique du type de film et, pour chacune des deux distributions statistiques, des pondérations (wₒ) et (w₁) sur la base de la saturation chromatique des vecteurs d'entrée mesurés;
ii) au moyen d'une mise en moyenne pondérée, dans un autre pas, à partir des deux distributions statistiques sont déterminés un vecteur de décalage final (m) et une matrice de covariance totale (K);
iii) est déterminé un vecteur propre principal (d) de la matrice de covariance (K);
iv) à partir de la connaissance du vecteur du décalage (m) et du vecteur propre principal (d) dont les composantes représentent les composantes (n₀₀, n₀₁, n₀₂) de la première ligne de la matrice de transformation de normalisation (N), sont, sous la condition aux limites que les axes du plan chromatique cherché soient perpendiculaires à l'axe de densité neutre normalisé (k₀') et le soient entre eux, déterminées les autres composantes de la matrice de transformation de normalisation (N) et également, du fait que D = N⁻¹, de celle de la transformation de dénormalisation (D).

8. Procédé selon l'une des revendications précédentes, caractérisé par le fait que la détermination des valeurs correctrices dénormalisées (Δk) pour un original déterminé (V) ne se fait qu'immédiatement avant, la production des tirages couleur désirés (F), de façon que les valeurs chromatiques obtenues à partir de cet original (V) soient chaque fois soumises à la transformation de normalisation la plus actuelle (N) et que les valeurs correctrices normalisées (Δk') qui en résultent le soient chaque fois à la transformation de dénormalisation la plus actuelle (D) qui est l'inverse de la transformation de normalisation respective (N).
